# EUROPEAN PATENT APPLICATION

(11) **EP 2 610 002 A1**
(43) Date of publication of application: **03.07.2013**
(21) Application number: 11195901.1
(22) Date of filing: 28.12.2011
(51) Int. Cl.: B01J 19/00, B01J 19/24, B01J 19/02

(54) **Interlock**

(71) Applicant: Ineos Europe AG, 1180 Vaud (CH)
(72) Inventor: The designation of the inventor has not yet been filed
(74) Representative: King, Alex

(57) **Abstract**

The present invention relates to an interlock for a purged vessel for a polymerisation process, which interlock comprises:
a. defining a threshold temperature based on the minimum design metal temperature for the metal from which the purged vessel is constructed,
b. measuring the temperature of the purged vessel, and
c. if the measured temperature is lower than the threshold temperature taking one or more actions to stop fiirther temperature decrease and/or increase the temperature.

## Description

The present invention relates to an interlock for a purged vessel for a polymerisation process.

The production of polymer powder by polymerisation reactions of monomers in the presence of catalysts is well-known. For example, processes are known and widely operated commercially using both fluidised bed reactors and slurry phase reactors.

In the gas fluidised bed polymerisation of olefins the polymerisation is conducted in a fluidised bed reactor wherein a bed of polymer particles is maintained in a fluidised state by means of an ascending gas stream comprising the gaseous reaction monomer. During the course of polymerisation, fresh polymer is generated by the catalytic polymerisation of the monomer, and polymer product is withdrawn to maintain the bed at more or less constant volume. An industrially favoured process employs a fluidisation grid to distribute the fluidising gas to the bed, and to act as a support for the bed when the supply of gas is cut off. The polymer produced is generally withdrawn from the reactor via a discharge conduit arranged in the lower portion of the reactor, near the fluidisation grid.

In a slurry polymerisation process the polymerisation is conducted in a stirred tank or, preferably, a continuous loop reactor comprising mainly polyolefin, hydrocarbon diluent and a catalyst for the polymerisation. Polymer product is removed from the reactor in the form of a slurry in the diluent.

Fresh monomers and other feeds are fed to the process to replace those consumed. In general, feeds to the process are passed through one or more treatment vessels comprising treatment beds to remove undesired components which might otherwise adversely influence the polymerisation process, for example by acting to poison the polymerisation catalyst.

The treatment beds may comprise beds of material which act to remove the undesired components. The treatment beds must be periodically treated to remove the undesired components, a process known as regeneration.

The use of such treatment beds in itself has been known for a number of years. More recently, WO 2010/123748 describes a method and system for regeneration of purification beds using a jet compressor in an open cycle.

Regeneration generally involves stopping passage of the fluid to be treated e.g. monomer, to the treatment vessel. The treatment bed is then usually depressurised and purged with an inert gas flow, generally heated, to remove the undesired components. Such processes are described generally in WO 2010/123748.

One problem that can occur during regeneration is that the components to be removed (monomers, comonomers and others (e.g. pentane and undesirable impurities)) are initially present in relatively large quantities. Initial removal can be rapid, especially when the pressure is first reduced, but during the later stages of purging large temperature decreases may occur in the treatment vessel, by a process known as autorefrigeration. Autorefrigeration occurs when components to be removed are removed at such a rate from the absorbent/adsorbent bed that cooling of the remaining materials exceeds the heat available from ambient sources. In particular, as vapour is removed from the treatment vessel and pressure is reduced the vaporised components that are withdrawn are replaced by further vaporisation of the undesired components from the treatment bed. This occurs with absorption of heat from, and hence cooling of, the remaining components and the vessel itself. For this reason, it is necessary to use materials, for example killed carbon steel or stainless steel, for the construction of the treatment vessels which must be rated to withstand very low temperatures.

Such materials add significantly to the cost of treatment vessels, and hence of the overall process.

It has now been found that the use of a low temperature interlock on a treatment vessel for a polymerisation process feed allows materials with less stringent ratings to be used for construction of the treatment vessels. Further, the interlock may be applied to any vessel which may be purged to remove hydrocarbons.

Thus, in a first aspect, the present invention provides an interlock for a purged vessel for a polymerisation process, which interlock comprises:
a. defining a threshold temperature based on the minimum design metal temperature for the metal from which the purged vessel is constructed,
b. measuring the temperature of the purged vessel, and
c. if the measured temperature is lower than the threshold temperature taking one or more actions to stop further temperature decrease and/or increase the temperature.

It should be noted that the concept of interlocks is known. In general terms interlocks may be provided for either safety or other operational reasons in a process. However, the present invention relates to an "interlock" which relates to safety and as such the term "interlock" as used herein means an instrumented system which is designed to act in response to a condition within a process (in this case a "low" temperature of the purged vessel) which indicates a potentially dangerous situation, and to thereby prevent or mitigate said situation.

The interlock monitors the purged vessel over time to check whether or not the condition does or does not indicate a potentially dangerous situation, and if the condition does indicate such a situation the interlock will act to prevent or mitigate said situation or consequence.

It should also be noted that an interlock tends to only act on the basis of whether a defined condition is or is not met i.e. the monitored condition either does indicate a potentially dangerous situation, in which case the interlock will act, or it does not, in which case the interlock will not act (or will stop acting if it previously was). Thus, whilst, in general, interlocks can act on a process condition, such as temperature or pressure, this is in addition to, and usually will override as necessary, more general "steady state" process control based on such parameters. For example, in relation to the present invention the temperature of the purged vessel will generally be controlled by a "conventional" control loop which attempts to protect the vessels mechanical integrity by acting to prevent over-cooling. This can be considered as a primary temperature control, whilst the interlock will act as a secondary or back-up mechanism which acts if this primary control fails to maintain the temperature above the defined threshold.

Another feature of interlocks is that the defined condition which triggers the interlock will usually be a condition outside normal operating ranges. For example, in the present invention the threshold temperature will be outside of (below) the normal range of temperature in the purged vessel.

Another feature of "interlocks" is that they generally require a "reset", usually a manual reset, once they have been triggered. Thus, once triggered, even if the condition which caused the interlock to be triggered no longer exists, the interlock needs to be reset before the interlock response can be turned off. As an example, in the present invention, even when the temperature subsequently increases above the threshold temperature due to the action in step (c), the operation prior to the initial triggering of the interlock does not automatically continue again.

The use of an interlock according to the present invention allows the safe use of materials which may otherwise not be considered to be appropriate for the construction of the purged vessel.

In particular, the minimum design metal temperature (MDMT) is a standard engineering value used in the design conditions for pressure vessels according to the ASME (American Society of Mechanical Engineers) Code for Pressure Piping, B31. In simple terms the MDMT is a temperature selected by the user of the vessel according to the type of fluid, pressure and temperature range the vessel is going to handle. Unless otherwise quoted, as used herein, the minimum design metal temperature is the value provided by ASME B31.5-2010 "Refrigeration Piping and Heat Transfer Components". A number of values are specifically defined for common piping materials in Table 502.3.1 of this document. Other useable materials and determination of their design temperatures are also discussed, for example in Chapter III of this document.

Examples of typical MDMT values in °F are:

| Material | Grade, Type or Class | MDMT /°F |
|---|---|---|
| | | (°C in brackets) |
| Seamless carbon steel pipe | A-1 | -20 (-29) |
| Seamless austenitic 18-8 stainless steel pipe | TP304L | -425 (-254) |
| Seamless 2Ni alloy steel pipe | 9 | -100 (-73) |
| Seamless Cr-Cu-Ni-Al alloy steel pipe | 4 | -150 (-101) |

In general terms, the material selected in a particular process will have an MDMT which must be lower than or equal to the lowest anticipated temperature to which the vessel will be subjected, taking into consideration lowest operating temperature, operational upsets, autorefrigeration, atmospheric temperature, and any other sources of cooling (the lowest anticipated temperature is sometimes referred to as the Critical Exposure Temperature or CET).

In the present invention, the use of an interlock allows the operator to increase the value of the lowest anticipated temperature, which thereby allows a material with a higher MDMT to be safely used for construction of the purged vessels.

The threshold temperature in step (a) should be above the MDMT. The threshold temperature should be sufficiently above the MDMT that the interlock can act to prevent the temperature reducing to below the MDMT i.e. to ensure that the lowest anticipated temperature to which the vessel will be subjected, taking into account the factors noted above and in addition the response of the interlock, will be equal to, but preferably greater than, the MDMT. Typically, the threshold temperature is at least 2°C above the MDMT, for example in the range 5 to 20°C above the threshold temperature, although higher differences may also be used.

The measuring of the temperature of the feed purged vessel may take place using a single measurement point or using a plurality of measurement points located at different positions on the vessel. Where a plurality of measurements are made each will usually be compared to the threshold value and the interlock triggered when any individual measurement is below the threshold value. Other variations are possible, but generally add complication for little overall benefit. For example, there may be different threshold values depending on the measurement location. One advantage of a plurality of measurements is that more confidence can be placed in the measurements and a faster detection of a low temperature may be expected, so a threshold temperature may be selected which is closer to the MDMT.

In step (c) if the measured temperature is lower than the threshold temperature one or more actions are taken to stop further temperature decrease and/or increase the temperature. In general, if the temperature is below the threshold value, but above the MDMT, then it is sufficient for safety purposes to take an action to stop further temperature decrease. Once the cause of the temperature decrease is stopped the temperature may subsequently increase "naturally", for example by absorption of ambient heat from external to the vessel. More generally, and especially if there is a threat of the temperature falling below the MDMT, then heat can be applied to increase the temperature, for example to above the threshold value, so that the operation prior to the triggering of the interlock can be re-started. In general, the largest temperature drops in a purged vessel have potential to occur during pressure reduction and/or on initiation of purging. For example, where the purged vessel is a feed treatment vessel, the pressure may be reduced from the pressure during feed treatment to the pressure at which the bed is regenerated. The simplest action which can therefore be taken in step (c) in such a scenario is to either stop reducing pressure or to increase pressure again. If a purge gas is being applied to the purged vessel then the flow rate of this exiting the vessel can be stopped or reduced, either by reducing or stopping the flow into the vessel or by reducing or stopping the flow out (which if the flow in is maintained can raise the pressure in the vessel at the same time.)

The interlock according to the process of the present invention may be applied to purged vessels constructed from any material, even those with relatively low MDMT values, such as aluminium and stainless steel. However, the invention is particularly advantageous in allowing use of materials which have relatively high MDMT values.

The materials of construction of the purged vessel in the process of the present invention preferably have an MDMT above -400°F (-240°C), more preferably above -200°F (-129°C), and most preferably above -40°F (-40°C).

In a preferred embodiment of the first aspect of the present invention the metal from which the purged vessel is constructed is carbon steel. In a second aspect the present invention provides an interlock for a purged vessel for a polymerisation process, where said feed treatment vessel is constructed from carbon steel, which interlock comprises:
a. defining a threshold temperature,
b. measuring the temperature of the purged vessel, and
c. if the measured temperature is lower than the threshold temperature taking one or more actions to stop further temperature decrease and/or increase the temperature.

The threshold temperature in this second aspect should be above -29°C. This allows carbon steel with an MDMT of -29°C to be used. Such carbon steels may be considered as "conventional" carbon steels and distinguished from so-called "low temperature carbon steels" with MDMT's below -29°C (Typically of -45°C).

The threshold temperature is preferably at least -25°C.

In a third aspect, the present invention provides a process for the purging of hydrocarbons in a purged vessel, which process comprises
i. measuring the temperature of the purged vessel during the purging, and
ii. if the measured temperature is lower than a threshold temperature taking one or more actions to stop further temperature decrease and/or increase the temperature.

In all aspects of the present invention the purged vessel may be any vessel in which a purge gas is applied to remove hydrocarbons. Any suitable purge gas can be used. The purge gas is usually an inert gas, and most usually nitrogen.

The purging in the purged vessel may take place only during certain periods of time i.e. it does not have to be continuous. In fact, it is usually discontinuous since the biggest risk of a low temperature usually occurs when purge gas is first applied to a vessel.

As one example, the purged vessel may be a degassing vessel in which polymer removed from the polymerisation reactor is purged to remove residual hydrocarbons. Although such a vessel generally operates continuously to purge polymer at designed temperatures during polymer production, it has been found that there is a risk of autorefrigeration when purge gas is first introduced into the vessel after a shut-down if there are also residual hydrocarbons in the degasser. The interlock according to the present invention can help protect the mechanical integrity of this vessel therefore.

As a second example, the purged vessel may be a catalyst preparation or waste tank. Such tanks may contain slurries of catalyst in hydrocarbon liquids. To empty and clean such vessels they can be opened to dump any remaining contents, and then purged to remove residual hydrocarbons. Again, if residual hydrocarbon liquid is present this purging can potentially lead to autorefrigeration.

Most preferably, the purged vessel is a feed treatment vessel for the removal of impurity hydrocarbons from a feed stream. As previously noted, hydrocarbon feeds to a polymerisation process are usually passed through one or more treatment vessels, comprising treatment beds, to remove undesired components which might otherwise adversely influence the polymerisation process, for example by acting to poison the polymerisation catalyst. The treatment beds may comprise beds of material which act to remove the undesired components, and which must be periodically treated to remove the undesired components, a process known as regeneration. In this case, therefore, the purging is part of the regeneration of said feed treatment bed by removal of the hydrocarbons.

The purged vessel is preferably a purged vessel associated with either a gas phase or a slurry phase polymerisation process, and most preferably for the production of polyethylene and/or polypropylene.

The present invention is illustrated by the following Examples.

### Examples

The examples use a feed treatment vessel which contains a bed of a molecular sieve (zeolite) for the purification of 1-butene. The vessel is made from carbon steel and is rated for a lowest temperature of -10°C. This rating temperature was selected with a safety margin of several degrees above the estimated MDMT for the vessel under foreseen operating conditions.

In duty, after the bed becomes saturated with impurities, the treatment vessel must be regenerated. It is taken out of service by isolating it from the flow of 1-butene. Regeneration takes place by initially depressurising, venting and draining the vessel of 1-butene, followed by nitrogen purging at low pressure to assist desorption of impurities from the bed. The nitrogen is initially heated to the maximum temperature acceptable to the bed material, in this case 250°C, until the bed and vessel reach a stable, high temperature. After a suitable hold period the bed and vessel are cooled with nitrogen to approximately ambient temperature. The vessel is then refilled with 1-butene and put back into service.

### Comparative Example

This example is based on an actual incident at a commercial plant. During the nitrogen purging phase, despite the nitrogen being introduced at high temperature, the heat loss from the bed due to flashing of the 1-butene exceeded the heat input with the fresh nitrogen feed. This effect, known as autorefrigeration, is well-known, but it was surprising to the operators on the plant that, even with nitrogen heated to 250°C, the bed and vessel temperatures decreased rapidly. No interlock was implemented to protect the vessel from such an event and several vessel temperature indications fell to below -50°C (the limit of the temperature scale on the instruments) before action was taken. The process had to be stopped and the vessel checked for mechanical integrity. Some damage was observed and repairs were undertaken before the vessel could be put back in service.

### Example 1

This example is a prophetic example which shows how an interlock according to the present invention would have prevented the incident in the Comparative Example. The vessel is equipped with a series of thermocouples which measure the temperature of the vessel. A low temperature interlock is provided which is triggered if the temperature of one or more of the thermocouples registers a temperature below -10°C at any stage of the regeneration process.

If the interlock is triggered the draining of the vessel and the passage of any gases to the vessel are stopped, which prevents further temperature decrease.

## Claims

1. An interlock for a purged vessel for a polymerisation process, which interlock comprises:
a. defining a threshold temperature based on the minimum design metal temperature for the metal from which the purged vessel is constructed,
b. measuring the temperature of the purged vessel, and
c. if the measured temperature is lower than the threshold temperature taking one or more actions to stop further temperature decrease and/or increase the temperature.

2. An interlock according to claim 1 wherein the threshold temperature is at least 2°C above the minimum design metal temperature.

3. An interlock according to claim 1 or claim 2 wherein the interlock is triggered during pressure reduction and the one or more actions comprise to either stop reducing pressure or to increase pressure again until the temperature increases.

4. An interlock according to any one of the preceding claims wherein a purge gas is being applied to the purged vessel and the one or more actions comprise stopping or reducing the flow rate of purge gas exiting the purged vessel.

5. An interlock according to any one of the preceding claims wherein the materials of construction of the purged vessel have an MDMT above -400°F (-240°C), preferably above - 200°F (-129°C)and most preferably above -40°F (-40°C).

6. An interlock according to any one of the preceding claims wherein the purged vessel is constructed from carbon steel.

7. An interlock for a purged vessel for a polymerisation process, where said purged vessel is constructed from carbon steel, which interlock comprises:
a. defining a threshold temperature,
b. measuring the temperature of the purged vessel, and
c. if the measured temperature is lower than the threshold temperature taking one or more actions to stop further temperature decrease and/or increase the temperature.

8. An interlock according to claim 7 wherein the threshold temperature is at least -25°C.

9. An interlock according to any one of the preceding claims wherein the purge gas is an inert gas, and most preferably nitrogen.

10. An interlock according to any one of the preceding claims wherein the purged vessel is a feed treatment vessel for the removal of impurity hydrocarbons from a feed stream.

11. A process for the purging of hydrocarbons in a vessel, which process comprises
i. measuring the temperature of the vessel during the purging, and
ii. if the measured temperature is lower than a threshold temperature taking one or more actions to stop further temperature decrease and/or increase the temperature.
